# EUROPEAN PATENT SPECIFICATION

(11) **EP 1 779 735 B1**
(45) Date of publication and mention of the grant of the patent: **28.09.2011**
(21) Application number: 06255603.0
(22) Date of filing: 31.10.2006
(51) Int. Cl.: A23L 1/0562, A23L 1/0522, A23L 3/00

(54) **Gel for retortable food products and methods of preparing same**
Gel für sterilisierbares Lebensmittelprodukt und Verfahren zu dessen Herstellung
Gel pour produit alimentaire stérilisable et procédé pour sa préparation

(30) Priority: 31.10.2005 US 264719
(43) Date of publication of application: 02.05.2007
(73) Proprietor: THE QUAKER OATS COMPANY, Chicago, Illinois 60661 (US)
(72) Inventor: Foster, David, Mount Prospect 60056 IL (US); Parsons, Marcus, Crystal Lake 60014 IL (US); Meschewski, Robert, Crystal Lake 60014 IL (US); True, Christopher, Bartlet 60103 IL (US); Janning, Jessica, Chicago 60647 IL (US); Moraw, Claus, 23570 Lübeck (DE)
(74) Representative: MacLean, Martin Robert

(56) References cited:
- WO-A-99/33924
- JP-A- 4 063 580
- US-A1- 2004 224 025
- US-B1- 6 627 240
- DATABASE WPI Week 200209 Derwent Publications Ltd., London, GB; AN 2002-064447 XP002417380 & JP 2001 275626 A (NISSHIN FLOUR MILLING CO) 9 October 2001 (2001-10-09)
- DATABASE WPI Week 199227 Derwent Publications Ltd., London, GB; AN 1992-223950 XP002417381 & JP 04 152857 A (HASEGAWA CO LTD) 26 May 1992 (1992-05-26)

## Description

### Field of the Invention

The present invention relates to a stable, retorted food product as described in the claims. The specification also describes a gel that is effective as a gel carrier for food ingredients. The specification further describes a method of preparing a gel that is effective as a gel carrier for food ingredients. Food ingredients comprising the gel of the specification are sufficiently stable after retort processing.

### Background of the Invention

Retort processing typically involves placing packaged and sealed food products into a tray or basket that is contained in a pressurized retort vessel. The packaging is then subjected to steam of sufficient temperature to cook the food while killing pathogens. Properly retorted food products are then safe to sell to consumers.

Today, retort processing is commonly used to prepare a wide variety of foods including MREs - a military acronym that means "Meals Ready to Eat". MREs are easy to prepare by the consumer because no water is needed. While the MRE can be eaten cold when necessary, it can also be heated in a variety of ways, including submersion in hot water while sealed. Retorted food products allow for reduced consumer preparation time and enhanced food safety. However, retort technology is not without its drawbacks.

Retort processing requires heating the food product to high temperatures (around 121°C - 148°C) to accomplish sterilization. In addition to increased energy and equipment expenditures, high temperature processing can result in sticky, dumpy food products (especially when starch is present in the food) and can cause what is referred to as "bum on," linescale or fouling of the product, thereby imparting a commercially unacceptable burned or overcooked taste. Fouled product cannot be sold to consumers and is therefore discarded, resulting in a waste of materials and labor. Accordingly, the productivity and profitability of the retort process is decreased.

There is therefore a need for a food composition that can be used to preserve the stability of various foods, including pasta, rice, oats and barley, for example, that are subjected to retort processing.

### Summary of the invention

The specification describes a food composition capable of forming a gel that is effective as a gel carrier for food ingredients and acts as a stabilizing agent and provides stability to foods, especially starch-based foods that have been retorted. As used herein, the words "stabilizing" and "stability" when describing food ingredients that have undergone retort processing, refers to food ingredients that are not substantially hard, sticky clumpy, burnt or otherwise fouled.

The food composition as described herein comprises, exclusive of added water i) a first mixture comprising: a) at least 70 wt.% gelatin, based on the total weight of the first mixture; b) up to 10 wt% of a non-gum, non-starch polysaccharide, (typically about 0.5% to about 10% by weight) based on the total weight of the first mixture; c) up to 10 wt.% food starch, (typically about 0.5% to about 10% by weight) based on the total weight of the first mixture; d) up to 10 wt.% gum (typically about 0.5% to about 10% by weight), based on the total weight of the first mixture; e) optionally up to 10 wt.% anionic surfactant, based on the total weight of the first mixture; and f) optionally up to 10wt.% sugar, based on the total weight of the first mixture, and optionally ii) a second mixture comprising, exclusive of added water: a) up to 75 wt.% citric acid (typically about 25% to about 75% by weight), based on the total weight of the second mixture; b) up to 60 wt.% ascorbic acid (typically about 20% to about 60% by weight), based on the total weight of the second mixture; c) up to 15 wt.% sodium chloride (typically about 3% to about 15% by weight), based on the total weight of the second mixture; and d) up to 15 wt.% of citrate salt (typically about 3% to about 15% by weight), based on the total weight of the second mixture, wherein food ingredients comprising the gel of the present invention are stable after retort processing. Typically the relative amounts of the first and second mixtures are in the range of from about 10:1 to about 40:1.

The above-mentioned "typically" preferred ranges apply to all aspects of the present invention.

Also described herein is a gel composition that is effective as a gel carrier for food ingredients and that stabilizes food that is subjected to retort processing. The gel composition of the present invention comprises i) a first solution comprising: a) at least 70 wt.% gelatin, based on the total weight of the first solution; b) up to 10 wt.% of a non-gum, non-starch polysaccharide, based on the total weight of the first solution; c) up to wt.% food starch, based on the total weight of the first solution; d) up to 10 wt.% gum, based on the total weight of the first solution; e) optionally up to 10 wt.% anionic surfactant, based on the total weight of the first solution; f) optionally up to 10 wt.% sugar, based on the total weight of the first solution; and g) water having a temperature between 50°C and 110°C; and optionally ii) a second solution comprising: a) up to 75 wt.% citric acid, based on the total weight of the second solution; b) up to 60 wt.% ascorbic acid, based on the total weight of the second solution; c) up to 15 wt.% sodium chloride, based on the total weight of the second solution; and d) up to 15 wt.% citrate, based on the total weight of the second solution; and e) water typically having a temperature between 1°C and 30°C; wherein food ingredients contained in the gel of the present invention are stable after retort processing.

Also described herein is a method of preparing a gel that is effective as a gel carrier for food ingredients. The method comprises preparing a blend by combining i) a first solution comprising: a) at least 70 wt.% gelatin, based on the total weight of the first solution; b) up to 10 wt.% of a non-gum, non-starch polysaccharide, based on the total weight of the first solution; c) up to 10 wt.% food starch, based on the total weight of the first solution; d) up to 10 wt.% gum, based on the total weight of the first solution; e) up to 10 wt.% anionic surfactant, based on the total weight of the first solution; f) up to 10 wt.% sugar, based on the total weight of the first solution; and g) water having a temperature between 50°C and 110°C; with ii) a second solution comprising: a) up to 75 wt.% citric acid, based on the total weight of the second solution; b) up to 60 wt.% ascorbic acid, based on the total weight of the second solution; c) up to 15 wt.% sodium chloride, based on the total weight of the second solution; and d) up to 15 wt.% of a citrate salt, based on the total weight of the second solution; and e) water typically having a temperature between 1°C and 30°C; holding the blend until the blend forms a gel; and adding at least one food ingredient to the gel; wherein the food ingredients contained in the gel of the present invention are stable after retort processing. In accordance with another aspect of the invention, a stable retorted food product is provided. The stable retorted food product comprises a food product which typically is a starch-based food material(a grain-based material, such as, for example, pasta, rice, oatmeal, barley and mixtures thereof), the gel carrier of the present invention and water. Typically, the amount of gel carrier on a dry weight basis (no added water) will be from about 0.75% to about 10% by weight of the total food product composition, including water. Water is present in a sufficient amount for the desired consistency and in an amount desired for cooking the food ingredient(s) for example.

The invention provides a stable, retorted food product. The product comprises first about 90% to about 99.25% by weight of a food ingredient and water; from about 10% to about 0.75% by weight of a composition comprising: i. a first mixture comprising: a. at least 70 wt.% gelatin, based on the total weight of the first mixture, the gelatine not derived from fish; b. 0.05% to 10 wt.% non-gum, non-starch polysaccharide, based on the total weight of the first mixture; c. food starch, up to 10 wt.% based on the total weight of the first mixture; d. gum, up to 10 wt.% based on the total weight of the first mixture; e. optionally, up to 10 wt.% anionic surfactant, based on the total weight of the first mixture; and f. optionally, up to 10 wt.% sugar, based on the total weight of the first mixture; and optionally ii. a second mixture comprising: a. up to 75 wt.% citric acid, based on the total weight of the second mixture; b. up to 60 wt.% ascorbic acid, based on the total weight of the second mixture; up to 15 wt.% sodium chloride, based on the total weight of the second mixture; and up to 15 wt.% of a citrate salt, based on the total weight of the second mixture; wherein the ratio of the first mixture to the second mixture, if present, is in the range of about 10:1 to about 40:1

### Detailed Description of the Invention

Any gelatin, with the exception of fish gelatin, can be used in the present invention. Beef gelatin is preferably used. Beef gelatin preferably used in the present invention is Gelatine Type B, 225 Bloom, sold by Gelita Group under the tradename Gelatine Type B, 225 Bloom.

Any suitable non-gum, non-starch polysaccharide can be used in the present invention. Suitable non-gum polysaccharides typically have a weight average molecular weight in excess of about 3600. Maltodextrin is preferred. Preferably, the maltodextrin used is C Drylight 01970 sold by Cerestar under the tradename C Drylight 01970. Preferably, maltodextrin used in the present invention has a dextrose equivalent (DE) of 3.

Any suitable food starch can be used in the present invention. Preferably, rice starch is used. The starch may be waxy, but can be non-waxy. Preferably the starch is unmodified, but modified starch can be used. Preferably the starch has an extremely small granule size, such as about 2 to about 8 microns. Preferably the starch has a low gelatinization temperature. Rice starch preferably used in the present invention is Remyline AX DR sold by Remy industries under the tradename Remyline AX DR.

Any suitable gum can be used in the present invention. Guar gum is preferably used. Guar gum preferably used in the present invention is Edicol ULV 50 sold by Singelmann under the tradename Edicol ULV 50. Preferably, guar gum used in the present invention has a number average molecular weight in the range of about 100,000-150,000.

Any suitable anionic surfactant can be used in the present invention. Sodium carboxymethylcellulose is preferably used.

Any suitable sugar can be used in the present invention. Dextrose is preferred.

Gelatin, polysaccharide, food starch, gum, anionic surfactant and sugar, are combined by any method known in the art to form a first mixture. Preferably, the ingredients are combined by dry blending using a paddle mixer. The mixture can be in any form but is preferably in the form of a powder**.**

The first mixture of the present invention (as defined in the claims) comprises at least 70 wt.% gelatin, preferably, between about 80 to about 95 wt.% gelatin, more preferably, between about 87.5 to about 89 wt.% gelatin, based on the total weight of the first mixture.

The first mixture of the present invention also comprises 0.05% to 10% non-gum, non starch polysaccharide, preferably, between about 0.5 to about 6 wt.% polysaccharide, more preferably, between about 1 to about 4 wt.% polysaccharide, based on the total weight of the first mixture.

The first mixture of the present invention further comprises food starch up to about 10 wt.% preferably, between about 0.5 to about 8 wt.% food starch, more preferably, between about 2 to about 6 wt.% food starch, based on the total weight of the first mixture. Rice starch is a preferred starch. Furthermore, the first mixture of the present invention comprises gum, up to about 10 wt.% preferably, between about 0.05 to about 5 wt.% gum, more preferably, between about 0.5 to about 2 wt.% gum, based on the total weight of the mixture.

The first mixture of the present invention also optionally comprises up to about 10 wt.% anionic surfactant, preferably, between about 0.05 to about 5 wt.% anionic surfactant, more preferably, between about 0.5 to about 2 wt.% anionic surfactant, based on the total weight of the first mixture. Additionally, the first mixture of the present invention optionally comprises up to about 10 wt.% sugar, preferably, between about 0.05 to about 5 wt.% sugar, more preferably, between about 0.5 to about 2 wt.% sugar, based on the total weight of the first mixture.

In its preferred powder form, the first mixture of the present invention has a moisture content from about 8 to about 15 wt.%, preferably, 11.5 wt.%, based on the total weight of the first mixture. The first of the present invention has a water activity of about 0.49. Water activity of the first mixture is determined by any method known in the art. The moisture content is defined as the ratio, expressed as a percentage, of the mass of the water to the mass of the first mixture in powder form.

The moisture content is determined by any method known in the art. Preferably, the moisture content is determined by halogen drying at a temperature of 100 °C.

The second mixture of the present invention comprises up to about 75 wt.% citric acid, preferably, about 55 wt.% citric acid, based on the total weight of the second mixture. The second mixture also comprises up to about 60 wt.% ascorbic acid, preferably, about 35 wt.% ascorbic acid, based on the total weight of the second mixture. Additionally, the second mixture of the present invention comprises up to about 15 wt.% sodium chloride, preferably, about 5 wt.% sodium chloride, based on the total weight of the second mixture. The second mixture of the present invention also comprises up to about 15 wt.% of a citrate salt, preferably, about 5 wt.% of a citrate salt, including calcium citrate, potassium citrate, sodium citrate and mixtures thereof, based on the total weight of the second mixture.

Any food grade citric acid, ascorbic acid, sodium chloride and citrate salt can be used in the present invention. Calcium citrate is a preferred citrate salt. Citric acid, ascorbic acid, sodium chloride and citrate salt are combined by any method known in the art to form a second mixture. Preferably, citric acid, ascorbic acid, sodium chloride and citrate salt are combined by dry blending using a paddle mixer. The second mixture of the present invention can be in any form but is preferably in the form of a powder.
The powder is formed by any method known in the art.

In its preferred powder form, the second mixture of the present invention preferably has a moisture content from about 1 wt.% to about 5 wt.%, more preferably, about 1.9 wt.%, based on the total weight of the second mixture. The second mixture of the present invention has a water activity of about 0.52. Water activity of the second mixture is determined by any method known in the art. The moisture content is defined as the ratio, expressed as a percentage, of the mass of the water to the mass of the second mixture in powder form. The moisture content is determined by any method known in the art. Preferably, the moisture content is determined by Halogen drying at a temperature of 100 °C.

The first mixture of the present invention preferably further comprises water having a temperature between 50°C and 100°C, preferably, between 60°C and 70°C, more preferably, 65°C. The water is mixed with the first mixture of the present invention using any mixing method known in the art. Preferably, high shear mixer is used. Mixing continues until the first mixture, in its preferred powder form, is substantially dissolved in the water, thereby forming a first solution.

The second mixture of the present invention preferably further comprises water having a temperature between 1°C and 30°C, preferably, between 1°C and 15°C, more preferably, 10°C. The water is mixed with the second mixture of the present invention using any mixing method known in the art. Preferably, high shear mixer is used. Mixing continues until the second mixture, in its preferred powder form, is substantially dissolved in the water, thereby forming a second solution. The first solution is combined with the second solution to form a blend. Under the conditions noted below, the blend forms a gel. Any food grade oil and/or flavoring can be added to the blend in any desired amount One reason for the addition of oil to the blend is to impart "mouthfeel" to the gel.

Any mixing technique can be used to combine the first and second solutions of the present invention to form the blend. Preferably, high shear mixer is used. Mixing of the first and second solutions occurs in a mixing tank. Upon formation of the blend, any pump known in the art can be used to pump the blend from the mixing tank to a holding tank. The holding tank retains the blend at a temperature no greater than 30°C, preferably, no greater than 10°C, until a gel forms. This can be accomplished by using, for example, a holding tank that is jacketed with cold water circulating through the jacket. The amount of time the blend must be held in the holding tank until gel formation occurs depends upon the amount of blend present Typically, 100 pounds of blend forms a gel in 1.50 to 2.00 hours. As used herein, the term "gel" refers to the blend in a substantially semi-solid state. The gel preferably has a pH in the range of about 6.0 to about 62. The pH of the gel is determined by any method known in the art.

Any technique can be used to determine if the blend has formed a gel. Preferably, a "hand/eye method" is used. This method involves observing the blend with the eye and/or stirring the blend by any method known in the art until observing the blend in a substantially semi-solid.

Once the blend forms a gel, food grade ingredients are added to the gel to form a suspension of food ingredients in the gel. Preferably, food ingredients used in the present invention are uncooked or partially cooked. Food ingredients useful in the present invention include starch-based food products including pasta, oats, rice, various food particulates or any combination thereof. Preferably, the food particulates, include, dried vegetables, dried fruit, dried nuts, dried rice, and/or barley available from any supplier are used. Spices, seasonings and herbs including added sodium chloride can be used to season the suspension as desired. More preferably, substantially dry, unblanched rice, steel cut oats and/or pearled barley flakes are used. The food ingredients are mixed with the gel using a low shear mixing method until the food grade ingredients are substantially suspended in the gel. Preferably, the food ingredients are mixed with the gel using a scraped surface mixer.

A desired amount of the suspension is filled into any retortable packaging material. The packaging material is preferably a retortable plastic bowl or pouch. More preferably, the packaging material is a retortable flexible pouch. Any type of filling equipment can be used to fill the suspension into the retortable packaging material.

Any type of process to transfer the suspension from the holding tank to the filling equipment can be used. Preferably, a pump that conforms with the specifications of the holding tank is used to pump the suspension to the filling equipment.

After the suspension is suitably filled in appropriate packaging, the packaging is preferably subjected to vacuum oxygen removal, nitrogen flushing or oxygen absorption. Preferably, packaging filled with the suspension of the present invention is flushed with nitrogen. Nitrogen flushing is a known process that protects against oxidation damage by removing oxygen from the unfilled portion of the packaging and replaces it with inert nitrogen. Nitrogen flushing is accomplished using any method known in the art.

After oxygen removal (if used), packaging containing the suspension of the present invention is sealed. The packaged suspension of the present invention is preferably sterilized by retort processing. Retort sterilization is known and includes both static and rotary retort.

In a typical static or rotary retort, product filled and sealed in retortable packaging placed into a tray or basket in a pressurized retort vessel. The packaging is then subjected to high temperatures, typically, 121°C - 148°C. This temperature is sufficient to cook food grade ingredients while killing pathogens. The typical retort cycle has both a heating and cooling phase. Additional programmable variables include pressure, temperature, rotary speed (if applicable) and water level. The length of time and temperature used in retort processing varies according to the suspension contained in the sealed retortable packaging.

Surprisingly, uncooked or partially cooked starch-containing food ingredients can be used in the present invention to produce quality, edible food ingredients comprising the gel of the present invention that are simply heated by the consumer (if desired) before consumption and that have desirable texture for an acceptable amount of time after consumer preparation.

During retort, starch sloughs off uncooked or partially cooked starch-containing food ingredients. The result typically is a starchy or sticky finished product. However, finished-product starchiness (stickiness) does not occur when a consumer properly prepares food grade ingredients comprising the gel of the present invention. This is because, during retort, starch that sloughs off starch-containing food grade ingredients comprising the gel of the present invention is not released but rather binds with protein in the gel.

As previously mentioned, starch-containing food ingredients that can be used in the present invention include steel cut oats. A suspension of the present invention comprising steel cut oats is retorted for approximately 23 - 27 minutes at about 120°C.

Static and rotary retort both provide cooking of the food ingredients suspended in the gel. Such cooking has the beneficial effect of reducing the time the consumer has to spend preparing the suspension for consumption. For example, steel cut oats that are not processed by static or rotary retort take the consumer approximately 30 minutes to prepare. However, the suspension of the present invention comprising steel cut oats and processed by retort takes the consumer just over one minute to prepare and, when properly prepared, retains its desirable texture after consumer preparation. "Properly prepared" as used herein refers to preparation according to provided instructions.

As previously mentioned, unblanched, substantially dry rice can be used as a food ingredient in the present invention. A suspension of the present invention comprising unbalanced, substantially dry rice can be retorted for approximately 30 - 45 minutes at about 165°C. The suspension of the present invention comprising unblanched, substantially dry rice processed by retort takes the consumer just over one minute to prepare and, when properly prepared, retains its desirable texture after consumer preparation.

### EXAMPLES

The following examples of the invention are provided by way of explanation and illustration.

Example 1: preparation of a retorted-rice product:

A gel according to the present invention can be prepared by holding a blend in a holding tank that is a combination of: I. 1.03 wt.%, based on the total weight of the gel, of a first mixture of: a) 89 wt.% Gelatine Type B, 225 Bloom, sold by Gelita Group under the tradename Gelatine Type B, 225 Bloom; b) 2 wt.% C Drylight 01970 sold by Cerestar under the tradename C Drylight 01970, c) 5 wt.% Remyline AX DR sold by Remy Industries under the tradename Remyline AX DR; d) 1 wt.% Edicol ULV 50 sold by Singelmann under the tradename Edicol ULV 50; e) 1 wt.% sodium carboxymethylcellulose; f) 2 wt.% dextrose, based on the total weight of the first mixture; with II. 80 wt.% water having a temperature of 65°C, based on the total weight of the gel; with III. .05 wt.%, based on the total weight of the gel, of a second mixture that is the combination of : a) 55 wt.% citric acid; b) 35 wt.% ascorbic add; c) 5 wt.% sodium chloride; and d) 5 wt.% calcium citrate, based on the total weight of the second mixture; with IV. 17.95 wt.% water, having a temperature of 10°C, based on the total weight of the gel. A suspension can then be formed by combining a) 59 wt.% of the gel of the present invention; b) 0.50 wt.% salt; and c) 40.50 wt.% food ingredients, including dry, unblanched rice, based on the total weight of the suspension. The holding tank retains the blend for 1.50 to 2.00 hours at a temperature no greater than about 10°C until the blend forms a geL Under low shear mixing, the dry, unblanched rice, dried vegetables, dried nuts and then dried fruit can be added until the food grade ingredients are suspended in the gel to form a suspension.

A desired amount of suspension is pumped from a holding tank to the filling equipment for filling the suspension into a retortable flexible pouch. The pouch can then be subjected to nitrogen flushing. The pouch is then placed into a tray or basket in a pressurized retort vessel. The packaging can then be subjected to a temperature 30 - 45 minutes at about 165°C. A retorted rice product produced by Example 1 of the present invention has a water activity of about .91. The amount of maltodextrin in the retorted rice product produced by Example 1 of the present invention is 0.035.

Example 2: preparation of a retorted steel cut oats product:

A gel according to the present invention can be prepared by holding a blend in a holding tank that is a combination of: I: 1.50 wt.%, based on the total weight of the gel, of a first mixture of: a) 89 wt.% Gelatine Type B, 225 Bloom, sold by Gelita Group under the tradename Gelatine Type B, 225 Bloom; b) 2 wt.% C Drylight 01970 sold by Cerestar under the tradename C Drylight 01970, c) 5 wt.% Remyline AX DR sold by Remy Industries under the tradename Remyline AX DR; d) 1 wt.% Edicol ULV 50 sold by Singelmann under the tradename Edicol ULV 50; e) 1 wt.% sodium carboxymethylcellulose; f) 2 wt.% dextrose, based on the total weight of the first mixture; with II. 80 wt.% water having a temperature of 65°C, based on the total weight of the gel; with III. .05 wL%, based on the total weight of the gel, of a second mixture that is the combination of : a) 55 wt.% citric acid; b) 35 wt.% ascorbic acid; c) 5 wt.% sodium chloride; and d) 5 wt.% citrate, based on the total weight of the second mixture; with IV. 17.95 wt.% water, having a temperature of 10°C, based on the total weight of the gel. A suspension can then be formed by combining a) 74.50 wt.% of the gel of the present invention; b) 0.50 wt.% salt; and c) 25.00 wt.% food grade ingredients, including steel cut oats, based on the total weight of the suspension. The holding tank retains the blend for 1.50 to 2.00 hours at a temperature no greater than about 10°C until the blend forms a gel. Under low shear mixing, the steel cut oats can be added to the gel, then dried vegetables, dried nuts and then dried fruit can be added until the food grade ingredients are suspended in the gel to form a suspension.

A desired amount of suspension is pumped from a holding tank to the filling equipment for filling the suspension into a retortable bowl. The bowl can then be subjected to nitrogen flushing. The bowl is then placed into a tray or basket in a pressurized retort vessel. The packaging can then be subjected to a temperature 23 - 27 minutes at about 120°C. A retorted steel cut oats product produced by Example 2 of the present invention has a water activity of about .91. The amount of maltodextrin in the retorted steel cut oats product produced by Example 2 of the present invention is 0.04.

## Claims

1. A stable, retorted food product comprising:
90% to 99.25% by weight of a food ingredient and water; from 10% to 0.75% by weight of a composition comprising:
i. a first mixture comprising:
(a) at least 70 wt.% gelatine, based on the total weight of the first mixture, the gelatine not derived from fish;
(b) 0.05% to 10 wt.% non-gum, non-starch polysaccharide, based on the total weight of the first mixture;
(c) food starch, up to 10 wt. % based on the total weight of the first mixture;
(d) gum, up to 10 wt. % based on the total weight of the first mixture;
(e) optionally, up to 10 wt.% anionic surfactant, based on the total weight of the first mixture; and
(f) optionally, up to 10 wt.% sugar, based on the total weight of the first mixture;
and optionally
ii. a second mixture comprising:
(a) up to 75 wt.% citric acid, based on the total weight of the second mixture;
(b) up to 60 wt.% ascorbic acid, based on the total weight of the second mixture;
(c) up to 15 wt.% sodium chloride, based on the total weight of the second mixture; and
(d) up to 15 wt.% of a citrate salt, based on the total weight of the second mixture;
wherein the ratio of the first mixture to the second mixture, if present, is in the range of 10: 1 to 40: 1.

2. The food product according to Claim 1, wherein the food ingredient comprises a starch-based food.

3. The food product according to Claim 1 or Claim 2, wherein the food ingredient is selected from the group consisting of pasta, rice, oats, barley, vegetables, fruit, nuts.

## Patentansprüche

1. Ein stabiles, erhitzbares Nahrungsmittelprodukt umfassend:
90 Gew.-% bis 99,25 Gew.-% eines Nahrungsmittelbestandteils und Wasser,
10 Gew.-% bis 0,75 Gew.-% einer Zusammensetzung umfassend:
i. eine erste Mischung umfassend:
(a) mindestens 70 Gew.-% Gelatine, ausgehend vom Gesamtgewicht der ersten Mischung, wobei die Gelatine nicht von Fisch abgeleitet ist,
(b) 0,05 % bis 10 Gew.-% gummi-, stärkefreies Polysaccharid, ausgehend vom Gesamtgewicht der ersten Mischung,
(c) Nahrungsmittelstärke, bis zu 10 Gew.-%, ausgehend vom Gesamtgewicht der ersten Mischung,
(d) Gummi, bis zu 10 Gewichtprozent ausgehend vom Gesamtgewicht der ersten Mischung,
(e) gegebenenfalls, bis zu 10 Gew.-% anionisches Tensid, ausgehend von dem Gesamtgewicht der ersten Mischung, und
(f) gegebenenfalls, bis zu 10 Gew.-% Zucker, ausgehend von dem Gesamtgewicht der
ersten Mischung,
und gegebenenfalls
ii. eine zweite Mischung umfassend:
(a) bis zu 75 Gew.-% Zitronensäure, ausgehend von dem Gesamtgewicht der zweiten Mischung,
(b) bis zu 60 Gew.-% Ascorbinsäure, ausgehend von dem Gesamtgewicht der zweiten Mischung,
(c) bis zu 15 Gew.-% Natriumchlorid, ausgehend von dem Gesamtgewicht der zweiten Mischung, und
(d) bis zu 15 Gew.-% eines Citratsalzes, ausgehend von dem Gesamtgewicht der
zweiten Mischung,
worin das Verhältnis der ersten Mischung zur zweiten Mischung, falls vorhanden, in dem Bereich von 10:1 bis 40:1 liegt.

2. Nahrungsmittelprodukt gemäß Anspruch 1, worin der Nahrungsmittelbestandteil ein auf Stärke basierendes Nahrungsmittel umfasst.

3. Nahrungsmittelprodukt gemäß Anspruch 1 oder 2, worin der Nahrungsmittelbestandteil ausgewählt ist aus der Gruppe bestehend aus Teigwaren, Reis, Hafer, Gerste, Gemüse, Früchte, Nüsse.

## Revendications

1. Produit alimentaire stable stérilisé à l'autoclave comprenant :
de 90 % à 99,25 % en poids d'un ingrédient alimentaire et de l'eau ; de 10 % à 0,75 % en poids d'une composition comprenant :
i. un premier mélange comprenant :
(a) au moins 70 % en poids de gélatine, en se basant sur le poids total du premier mélange, la gélatine ne provenant pas d'un poisson ;
(b) de 0, 05 % à 10 % en poids de polysaccharides qui ne sont ni des gommes, ni de l'amidon, en se basant sur le poids total du premier mélange ;
(c) jusqu'à 10 % en poids d'amidon alimentaire, en se basant sur le poids total du premier mélange ;
(d) jusqu'à 10 % en poids de gomme, en se basant sur le poids total du premier mélange ;
(e) éventuellement, jusqu'à 10 % en poids d'un tensioactif anionique, en se basant sur le poids total du premier mélange ; et
(f) éventuellement, jusqu'à 10 % en poids d'un sucre, en se basant sur le poids total du premier mélange ;
et éventuellement
ii. un second mélange comprenant :
(a) jusqu'à 75 % en poids d'acide citrique, en se basant sur le poids total du second mélange ;
(b) jusqu'à 60 % en poids d'acide ascorbique, en se basant sur le poids total du second mélange ;
(c) jusqu'à 15 % en poids de chlorure de sodium, en se basant sur le poids total du second mélange ; et
(d) jusqu'à 15 % en poids d'un sel citrate, en se basant sur le poids total du second mélange ;
dans lequel le rapport du premier mélange sur le second mélange, s'il est présent, se situe dans la plage allant de 10 : 1 à 40 : 1.

2. Produit alimentaire selon la revendication 1, dans lequel l'ingrédient alimentaire comprend un aliment à base d'amidon.

3. Produit alimentaire selon la revendication 1 ou la revendication 2, dans lequel l'ingrédient alimentaire est choisi dans le groupe comprenant de la pâte, du riz, de l'avoine, de l'orge, des légumes, des fruits, des noix.
